# EUROPEAN PATENT APPLICATION

(11) **EP 2 391 181 A1**
(43) Date of publication of application: **30.11.2011**
(21) Application number: 11006802.0
(22) Date of filing: 26.10.2007
(51) Int. Cl.: H05B 1/02, A23L 1/10, A47J 27/04

(54) **System for a cooking method for porridge**

(30) Priority: 27.10.2006 US 588681
(62) Divisional of application: 07844631.7
(71) Applicant: The Quaker Oats Company, Chicago IL 60661 (US)
(72) Inventor: Trow, Liam Geoffrey, Nottingham Shire NG2 5PL (GB)
(74) Representative: Duxbury, Stephen

(57) **Abstract**

A food product is provided which is efficiently prepared for eating. The food product includes a grain-based food product such as instant oatmeal. A liquid is added to the instant oatmeal and heated with a steam. The use of steam shortens preparation time to about 45 to 60 seconds.

## Description

This application claims the benefit of U.S. Patent Application No. 11/588,661 filed October 27, 2006, which is incorporated herein by reference in its entirety.

### FIELD OF THE INVENTION

The present invention relates generally to hot cereal food products, and more particularly to efficiently preparing the hot cereal for consumption.

### BACKGROUND OF THE INVENTION

Natural cereals, such as oat cereals, have for many years been a staple of human diet due to its health benefits. For example, numerous studies have shown that eating oatmeal on a daily basis can help lower blood cholesterol, reduce risk of heart disease, promote healthy blood flows as well as maintain healthy blood pressure levels. Additionally, oatmeal has a high content of complex carbohydrates and fibers, which facilitates slow digestion and stable blood-glucose levels.

Traditional oatmeal is time consuming to prepare for consumption. Such hot oatmeal is typically prepared by adding water, and boiling for up to 12 minutes. With today's hectic lifestyle, consumers are demanding convenience, such as portability and ease of preparation. To reduce preparation time and increase the ease of preparation, hot oat cereal which is capable of microwave preparation has been developed. Due to inefficient heat transfer in such conventional preparation methods, however, the preparation time for consumption cannot be sped up without sacrificing textural quality.

Instant oatmeal has been developed which require only the addition of hot water. However, aside from cost issues, these instant oatmeal formulas, while good, do not have the same quality as traditionally prepared oatmeal.

Therefore, in view of the increased appreciation of the beneficial effects of oat products, it is desirable to improve the efficiency, convenience and results of consumer preparation of such oat products without sacrificing quality or flavor.

### SUMMARY OF THE INVENTION

The present invention relates to food products which are convenient, easy and quick to prepare. Additionally, the food product is healthy to eat. The food product can be a porridge, for example, oatmeal. The food product can also include other types of grain-based food products.

In one aspect, the invention relates to a method for preparing a food product. The method includes providing a grain-based food product in a container and adding a liquid to the food product to form a food product mixture. The food product is prepared for consumption by heating the food product mixture with a hot steam. The use of steam reduces preparation time.

In another aspect, the invention relates to a method for preparing a food product. The method includes providing a grain-based food product in a container in a vending machine. A food product is selected from the vending machine and opened. Liquid is added to the opened package and heated with steam to prepare the food product for consumption. Providing the food product in a vending machine makes the food product more convenient to obtain and eat.

These and other objects, along with advantages and features of the present invention herein disclosed, will become apparent through reference to the following description and the accompanying drawings. Furthermore, it is to be understood that the features of the various embodiments described herein are not mutually exclusive and can exist in various combinations and permutations.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention. In the following description, various embodiments of the present invention are described with reference to the following drawings, in which:
Fig. 1 shows a process for preparing a food product for consumption in accordance with one embodiment of the invention;
Fig. 2 shows a food product packaged in accordance with one embodiment of the invention; and
Fig. 3 shows a system for preparing a food product for consumption in accordance with one embodiment of the invention.

### DETAILED DESCRIPTION OF THE INVENTION

The present invention relates to a hot food product. The hot food product comprises, for example, grains such as oat, wheat, corn (maize), rice, barley, millet, sorghum (milo), rye, triticale, teff, wild rice, spelt, buckwheat, amaranth, quinoa, kaniwa, cockscomb or a combination thereof (e.g., multi-grain). In one embodiment, the hot food product comprises instant oatmeal. Food products formed from other types of grains and provided in various forms, such as instant, non-instant, or semi-instant forms, are also contemplated and within the scope of the invention. For example, the hot food product can comprise instant grits, oatmeal, pasta or any other type of starched food product.

In one embodiment, the oatmeal is formed using various conventional techniques. Such techniques, for example, include using something as simple as a steam arm from a consumer or industrial coffee machine. Such consumer machines include HINARI brand milk frothers and industrial machines include CIMBALI brand coffee makers.

Oatmeal for use by consumers generally comprises flakes. The flakes typically are, for example, about 0.63 millimeters in size and about 0.011-014 inches thick. Oat flakes having other sizes or thicknesses are also contemplated and within the scope of the invention, as are steel cut (pinhead) oats. The selected size and thickness may depend on the texture and type of cereal to be formed. For example, "old fashion" style oatmeal has flakes which are usually larger and thicker (about 0.020-0.028 inches) while "quick" style oatmeal has flakes which have a thickness between "old fashion" and "instant" styles (about 0.015-0.019 inches). The oat flakes are dried to a moisture content of about 12%. Additional ingredients may be added to the cereal. Such ingredients, for example, include flavoring agents, coloring agents, sweeteners such as sugar and fruit pieces, salt, guar gum, food stabilizer, as well as vitamins and minerals, nuts, seeds, emulsifiers and dried milk powder.

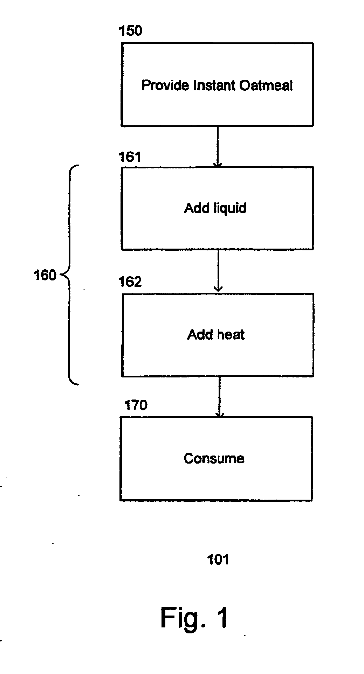

Fig. 1 shows a process 101 for preparing the food product in accordance with one embodiment of the invention. At step 150, instant oatmeal is provided. In one embodiment, an individual serving of oatmeal is provided. The oatmeal, for example, can be plain or flavored, as desired. A container is provided in which the oatmeal is disposed.

The oatmeal is prepared for consumption at step 160. Preparation of the oatmeal includes adding an appropriate amount of liquid to the oatmeal in the container at step 161, forming an oatmeal mixture. The liquid, for example, comprises water or milk. Typically about 180 ml liquid is added to a serving of about 30 grams of instant oatmeal. The temperature of the liquid, typically, is about 1 °C to 30°C and can be between 5°C and 20°C. Other temperatures for the liquid can also be useful. The temperature may depend on the type of liquid added. For example, milk is typically added at a temperature of about 5°C to 10°C, while water can be at a temperature of about 15°C to 20°C. There are no limits to the specific temperature of the liquid to be used in this invention.

At step 162, heat is added to the oatmeal mixture. In accordance with one embodiment of the invention, the heat is added in the form of a hot steam. The steam is directly injected into the mixture to heat it. Various types of steam sources can be used to provide the steam. For example, the steam can be supplied from a frother on an espresso machine. Generating steam using a standalone steam system is also useful. Preferably, the steam is injected at a pressure of about 220 psi (15 bar). Typically, the steam is initially at a relatively high psi and is gradually reduced over time.

The steam heats the oatmeal mixture sufficiently to prepare the oatmeal for consumption. The generated steam has a high sufficient temperature to ensure optimal cooking of the food product. One skilled in the art would easily determine the optimal temperature for the steam. For example, the steam supplied from an espresso machine has an optimal temperature for the purposes of this invention. In one embodiment, the temperature to which the oatmeal mixture is heated is about 90°C. Typically, the oatmeal is heated by the steam for about 60 seconds. For small single-serve products, the steam is typically injected for 60 to 70 seconds. In larger versions, the steam is typically injected for 45 to 60 seconds. However, the steam can be used in a variety of materials (different psi and temperatures) and result in it being used for a variety of times.

Since heat transfers more efficiently with steam than conventional methods of heating using microwave or stove, the preparation time for the oatmeal can be shortened. Additionally, the oatmeal solution is stirred by the turbulence of the steam flow along the walls of the container thereby creating froth in the oatmeal solution and providing a creamy texture to the oatmeal. The oatmeal can be stirred by moving the container with respect to the steam nozzle. Also, due to the high pressure from the steam, oils in the cereal grains are emulsified to cause highly volatile compounds to attach themselves to the fats. As a result, a stronger fragrance and body is produced. After the oatmeal is sufficiently heated, it is ready for consumption at step 170.

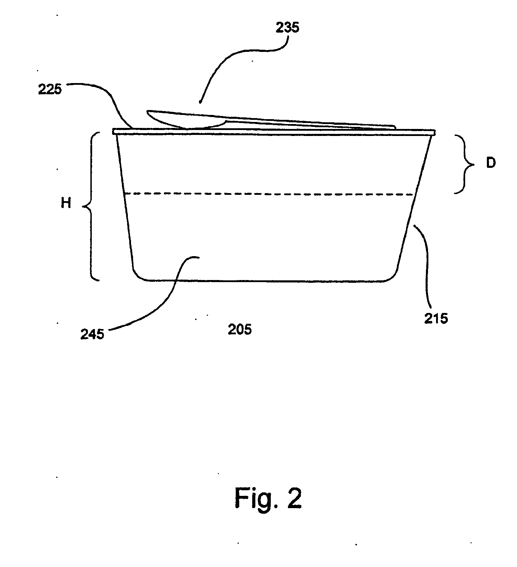

Fig. 2 shows one embodiment of a package 205 for the food product of the present invention. The package includes a disposable container 215. The container, for example, can be a cup, bowl or pot. Other types of containers are also useful. In one embodiment, the container has a size sufficient to contain an individual serving size of oatmeal 245. Typically, a serving size is about 180 ml of milk and about 30 grams of oats or any amount in that ratio of milk to oats. However, the ratio will change depending on the nature of the oatmeal desired (mouthful, taste). Also, the ratio will change depending on the ingredients and additives. Other serving sizes may also be useful. The container comprises a height H. The height H is sufficient to contain the oatmeal and an appropriate amount of liquid while leaving a sufficient distance D from the top to avoid overflow or spillage during heating. In one embodiment, the height of the container is about 8.5 cm and its radius is about 4.5 cm; for a starting material of about 180 ml of milk and about 30 grams of oats, this will clear a space of about 3 cm. Other sizes which avoid overflow or spillage during heating may also be useful.

The material of the container is selected to provide sufficient structural integrity during storage and from heat of preparing the oatmeal. The material, for example, should also be insulative, maintaining the oatmeal hot during consumption while allowing the container to be handled comfortably. Examples of heat insulated containers are paper cups used for coffee and tea. Various materials, such as expandable thermoplastic particles, including expandable polystyrene (EPS), polyolefin (e.g., polyethylene or polypropylene), polycarbonate and polyphenylene oxide particles are useful for forming the containers. It is also understood that multiple layers of materials can also be used to form the container.

A lid 225 can be provided, sealing the oatmeal in the container. The lid, in one embodiment, comprises a typical lid for a coffee or tea paper cup. In the alternative, a domed lid may be provided with a center hole allowing the introduction of a spoon. The center hole can be covered in a conventional way until it can be opened for use. The package should maintain the freshness of the food product for the duration of the product's shelf-life. Freshness, here, relates to the retention of favorable sensory attributes, such as texture, flavor, and appearance. Freshness also reflects maintenance of a non-spoiled state of the cereal-based or grain-based component and the food inclusion while stored in the package. Typically, the packaging should maintain the freshness of the cereal-based component and the inclusion for about close to one year to about 1 1/2 years. To further add to the convenience, a spoon can optionally be provided with the package.

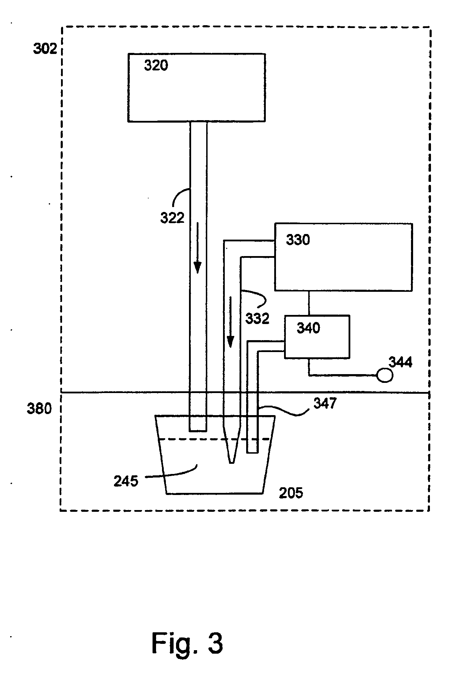

Fig. 3 shows a system 302 of preparing the food product in accordance with one embodiment of the invention. The system, for example, is incorporated into a vending machine. The vending machine can be used to store numerous instant oatmeal packages in different flavors. Providing instant oatmeal in vending machines adds accessibility and convenience to consumers who wish to eat oatmeal. For example, the vending machines can be located at work, stores, street, train or bus stations, or other convenient locations.

The system includes, for example, a preparation compartment 380, a liquid dispensing subunit 320 and a steam subunit 330. The liquid dispensing subunit dispenses liquid to the package 205 in the preparation compartment via liquid dispensing outlet 322. Various types of liquid dispensing units can be employed. For example, the liquid dispensing subunit could be of the type used in coffee machines or other types of beverage dispensing machines. In one embodiment, the liquid dispensing subunit dispenses water. Milk powder can be provided and mixed with the water at time of dispensing to provide milk. Alternatively the liquid dispensing subunit can be used to dispense fresh milk. In such a case, the milk is stored in, for example, a refrigerated reservoir.

The steam subunit 330 provides steam to the package 205 in the preparation compartment 380 via the steam dispensing outlet 332. Various types of conventional steam generators can be used. For example, the steam subunit includes a steam chamber. Steam is generated in the steam chamber by, for example, passing water at a slow flow rate through a heating unit. In one embodiment, the slow flow rate can be achieved by passing the water in a water passage with a small aperture. Because of the slow flow rate in the water passage, the water is turned to steam in the heating unit. The heating unit can comprise any conventional heating means, including electric coils. The steam chamber is preferably maintained at a constant pressure to ensure the injected steam has a pressure of about 200 psi to about 300 psi. Preferably, the injected steam has a pressure maintained at about 220 psi. Other suitable pressures are also useful.

A control subunit 340 is provided to control the operation of the liquid dispensing and steam subunits. Select dials or controllers 344 can be provided to appropriately program the subunits to operate in different modes. A thermometer 347 can be provided which is coupled to a control subunit 340. The control unit can monitor the temperature of the food product using the thermometer. If a threshold temperature is reached, the control subunit terminates the steam subunit.

A consumer, for example, places an open package 205 containing instant oatmeal 245 in the preparation compartment. In an alternative embodiment, the vending machine first dispenses an open container in the preparation compartment, and subsequently instant oatmeal into the container for preparation. When in the preparation compartment, sensors provided can be used to sense the presence of the package and move the liquid and steam dispensing outlets into position. If applicable, the thermometer is also moved into position. For example, the various components can be inserted into the container of the package. Providing components that remain stationary when the package is located in the preparation compartment is also useful.

The consumer may select the appropriate modes as desired. In one embodiment, a mode can be provided to select the amount of liquid to be dispensed. For example, normal, greater or lesser amounts of liquid can be dispensed. Additionally, the type of liquid, such as water or milk, can be selected to be dispensed. After the liquid is dispensed, the steam is provided to heat and prepare the instant oatmeal.

The invention may be embodied in other specific forms without departing from the spirit or essential characteristics thereof. The foregoing embodiments, therefore, are to be considered in all respects illustrative rather than limiting the invention described herein. The scope of the invention is thus indicated by the appended claims, rather than by the foregoing description, and all changes that come within the meaning and range of equivalency of the claims are intended to be embraced therein.

Notwithstanding the claims, the invention is also defined by the following clauses:
1. A method of preparing a food product comprising:
   providing a grain-based food product in a container;
   adding a liquid to the grain-based food product to form a food product mixture; and
   injecting into the food product mixture with a steam to prepare the food product ready for consumption.
2. The method of clause 1, wherein the method is used to prepare a food product.
3. The method of clause 1, wherein the grain-based food product comprises oatmeal.
4. The method of clause 1, wherein the liquid comprises milk.
5. The method of clause 1, wherein the liquid has a temperature of about 1°C to about 30°C.
6. The method of clause 5, wherein the injecting step is performed for about 45 seconds to about 60 seconds.
7. The method of clause 6, wherein the method is used to prepare a food product.
8. The method of clause 1, wherein the injected steam has a pressure of about 220 psi.
9. A method of preparing a food product comprising:
   providing a grain-based food product in a sealed container having a lid in a vending machine;
   selecting the grain-based food product from the vending machine;
   removing the lid from the sealed container;
   adding a liquid to the grain-based food product to form a food product mixture; and
   injecting the grain-based food product mixture with a steam from the vending
   machine to prepare the food product ready for consumption.
10. The method of clause 9, wherein the method is used to prepare a food product.

## Claims

1. A system for providing a food product, the system comprising:
a preparation compartment wherein the food product is prepared,
a liquid dispensing subunit for dispensing liquid to the preparation compartment, and,
a steam subunit for providing steam to the preparation compartment.

2. System according to claim 1 wherein the steam subunit comprises a steam chamber for generating steam, preferably wherein steam is generatable by passing water at a slow flow rate through a heating unit.

3. System according to claim 2 wherein the slow flow rate of water is achievable by passing water in a water passage with a small aperture.

4. System according to any of the preceding claims 2-3 wherein the steam chamber is maintained at a constant pressure to ensure the injected steam has a pressure of about 200 psi to about 300 psi, preferably wherein the injected steam has a pressure maintained at about 220 psi.

5. System according to any of the preceding claims further comprising a refrigerated reservoir.

6. System according to any of the preceding claims, further comprising a control subunit for controlling the operation of the liquid dispensing and steam subunits.

7. System according to claim 6 further comprising select dials or controllers to appropriately program the subunits to operate in different modes.

8. System according to claims 6 or 7 further comprising a thermometer coupled to the control subunit for monitoring the temperature of the food product.

9. System according to claims 6, 7 or 8 wherein steam is terminated by the control subunit when a threshold temperature is reached.

10. System according to any of the preceding claims further comprising dispensing means, for dispensing a food container in the preparation compartment.

11. System according to any of the preceding claims further comprising a steam dispensing outlet and a liquid dispensing

12. System according to any of the preceding claims further comprising sensing means for sensing the presence of a food container in the preparation compartment and optionally for moving the steam and liquid dispensing outlets, and/or the thermometer, into position.

13. A vending machine comprising a system according to any of the preceding claims, preferably for providing instant oatmeal.

14. A vending machine according to claim 13 further comprising a store for storing numerous instant oatmeal packages in different flavours.

15. Use of a vending machine according to claims 13 or 14 for providing instant oatmeal.
